(19) Europäisches Patentamt
European Patent Office
Office européen des brevets

(11) **EP 3 488 509 B1**

(12) **EUROPEAN PATENT SPECIFICATION**

(45) Date of publication and mention
of the grant of the patent:
**01.09.2021 Bulletin 2021/35**

(21) Application number: **16748278.5**

(22) Date of filing: **20.07.2016**

(51) Int Cl.:
***H02G 11/00*** *(2006.01)*

(86) International application number:
**PCT/EP2016/067339**

(87) International publication number:
**WO 2018/014956 (25.01.2018 Gazette 2018/04)**

(54) **SYSTEM FOR SUPPORTING A CABLE ACROSS TWO MOVABLE SECTIONS OF A STRUCTURE**

SYSTEM ZUR UNTERSTÜTZUNG EINES KABELS ZWISCHEN ZWEI BEWEGLICHEN TEILEN EINES BAUWERKS

SYSTÈME DE SUPPORT D'UN CÂBLE SUR DEUX SECTIONS MOBILES D'UNE STRUCTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.05.2019 Bulletin 2019/22**

(73) Proprietor: **Prysmian S.p.A.**
**20126 Milan (IT)**

(72) Inventors:
• **MAGNANI, Francesco**
**20126 Milan (IT)**

• **GENOVESI, Mario**
**20126 Milan (IT)**
• **BACCHINI, Marco**
**20126 Milan (IT)**
• **CASLINI, Danilo**
**20126 Milan (IT)**

(74) Representative: **Porta & Consulenti Associati S.p.A.**
**Via Vittoria Colonna, 4**
**20149 Milano (IT)**

(56) References cited:
**DE-A1- 2 656 200      US-A- 3 870 260**
**US-A- 4 093 047      US-A- 4 257 717**

## Description

### Technical field

The present invention relates to a system for supporting a cable across two movable sections of a structure. In particular, the present invention can be advantageously used in cable installation across two sections of a structure with a relative movement between each other.

### Background art

In the case of cable installations across sections of a bridge or a viaduct, for example, the movements induced by traffic, seismic events, thermal expansions and the like increase or reduce the distance between the sections of the bridge.

It is known to install a cable across two successive sections of a bridge by fixing the cable to the structure of the bridge to form a festoon across the expansion joint between the two sections, namely by fixing the cable to the two sections and by leaving loose a length of cable forming a catenary across the bridge expansion joint. With this solution, when the two sections of the bridge move with respect to each other, the festooned length of cable compensates the movement by changing the shape of the catenary.

In case of limited movements between two sections of the bridge, namely movements of few centimetres, the flexural deformation of the cable remains within acceptable values, but in case of a bridge or similar structure having a single element of considerable length (e.g. tens of meters) such as suspended bridges or viaducts, the total deformation may be so large that a single cable festoon cannot compensate for the relative movements between the parts.

Indeed, electric cables, such as Medium (MV) and High Voltage (HV) electric cables, comprise a complex structure that can be subjected to damages in case of high flexural deformation.

Medium (MV) and High Voltage (HV) electric cables comprise, preferably, a core and an outer sheath arranged in a radially outer position with respect to the core. The core comprises a conductor, an insulating system arranged in a radially outer position with respect to the conductor and a conductive screen arranged in a radially outer position with respect to the insulating system. The insulating system typically includes a first semiconductive layer arranged in contact with the conductor, an insulating layer arranged in a radially outer position with respect to the first semiconductive layer, a second semiconductive layer arranged in a radially outer position with respect to the insulating layer.

Moreover, the flexural deformations of the cable installed across two sections of a bridge are cyclic and thus can cause fatigue failures to the cable.

US 4257717 discloses method and apparatus for installing a power cable or a similar elongated member between two bodies. The cable on either side of an expansion joint is mounted on a series of elongated supporting members which each is free to move with respect to the bridge and the movement of these structures are forceably controlled so that the gap between any two of these structures will be the same as the main expansion joint opens and closes. In particular, a joint structure which is pivotally hinged to the static bridge head and which is slidingly supported by a section of the bridge by means of roller bearings. Mounted on the joint structure two parallel rails are arranged on which wagons are provided. The first wagon is fixedly mounted to the rails, and the last wagon is fixedly mounted to the bridge section. The remaining wagons are slidingly mounted on the rails. In the middle of each wagon a cable is fastened in order to assume a wavy line along the wagons. The distance between two adjacent wagons is forcibly varied in step with the variations of the expansion of the gap.

A first embodiment of US 4257717 discloses that for moving the sliding wagon a hydraulic system which employs a set of two hydraulic cylinders is provided, one master cylinder placed in the gap and operated by the bridge itself and one slave cylinder arranged to move the wagon due to the pressure generated by the master cylinder.

In a second embodiment, the sliding wagons are moved by a common threaded shaft acting on individual gears, one for each wagon. By choosing the pitch of the different parts of the shaft and/or by using properly selected gear ratios for each gear, the desired movement of each wagon is obtained. The shaft is operated hydraulic or pneumatic by a master cylinder or by an electric motor controlled by an expansion gap detector.

In a third embodiment, each wagon is controlled by a lever arm connected to lever arms on the adjacent wagons. The cable passes through cleats arranged on each lever member.

With the systems disclosed by US 4257717, the movement between two sections of the bridge is compensated by a plurality of movements of the cable crossing the gap between the two bridge sections, so reducing flexural deformations of the cable itself.

### Summary of the invention

The Applicant has observed that systems according to the first or second embodiment of US 4257717 require power supply, as for example specific hydraulic cylinders or specific electric motor. In addition, this kind of systems requires recurring inspection and maintenance for guarantee a proper functioning.

The Applicant has also observed that the system according to the third embodiment of US 4257717 has a single transmission ratio between the lever arms and it can work only if the the lever arms of the wagons have fixed length. Moreover, the system is not usable in the case of an obstacle installed between two wagons (e.g. an electrical cabin or the like) because the lever arms would interfere with such obstacle and the cable cannot be installed with festoons of different length. Further, if the system needs to be installed on large size structures, the lever arms have to be designed with considerable length which results in a cumbersome and heavy system, requiring a large area in transversal direction to accommodate the movement of the lever arms.

In view of the above, the Applicant has tackled the problem of supporting a cable, or a similar elongated element, on a structure undergoing dimensional changes, hereinafter defined as "movable", by distributing the overall displacement of one end of the structure in sections, wherein such sections may have the same or different lengths, with a compact system operating without requiring external power sources.

The Applicant has found a passive supporting system for a cable, comprising a first frame fixedly mounted on a first section of a moveable structure and a second frame movably mounted on a second section of the moveable structure, wherein the first frame is mechanically coupled to the second frame through a compact transmission member having a predetermined transmission ratio and the first frame triggers the movement of the second frame when the first and the second section of the structure move each other.

Within the present specification and claims, by "passive system" we mean a system which operates in absence of external power supply (such as, for example, electric power or hydraulic power).

The present invention, therefore, relates to a system for installing a cable across two movable sections as claimed by the annexed claim 1.

Preferably, the cable between the supports fixed to the frames is festooned. The festoons can be in the vertical or horizontal plane.

The Applicant has realized that by cinematically coupling the frames each other by a compact transmission member so that the transmission member is interposed and acts between frames which can be designed of different lengths, the movement of the frame fixedly mounted to the first section can be transmitted to the frame movably mounted to the second section saving installation room on the bridge.

Moreover, the Applicant has perceived that the transmission ratio of each transmission member can be chosen depending on the installation needs and, therefore, different transmission ratios between the frames can be set without changing the overall dimension of the system.

The Applicant has realized that by providing a transmission ratio of the first transmission member that decreases the movement transferred from the first to the second frame, the overall movement between the two sections of the structure can be divided into two movements.

Preferably, the system comprises a third frame acting on a portion of the cable for holding the same and mounted to the second section of the structure and movable thereto, wherein the third frame is adjacent and spaced apart from the second frame, the system further comprising a second transmission member positioned and acting between the second frame and the third frame, wherein said second transmission member is actuated by the second frame and actuates the third frame.

In this way, the overall movement between the two portions of the structure is shared among the three frames, so reducing the shifting of each length of the cable extending between two frames.

Preferably, the length of cable extending between two frames forms a festoon for allowing the length of cable to follow the relative movement of the frames.

Preferably, each transmission member has a corresponding transmission ratio for correlating the shifting of the frames on which the transmission member acts.

The Applicant has realized that by choosing proper transmission ratios of the transmission members, the overall movement of the two sections of the structure can be evenly apportioned among the frames, so minimizing the flexural deformation of cable.

According to a first and third embodiment of the invention, the system preferably comprises a fourth frame acting on portions of the cable for holding the same, mounted to the second section of the structure and movable thereto, wherein the fourth frame is adjacent and spaced apart from the third frame and wherein said fourth frame succeeds said third frame, the system further comprising a third transmission member acting on the fourth frame and being actuated by said third frame preceding said actuated fourth frame.

Preferably, the system comprises a plurality of said fourth frame, each of which succeeds a preceding fourth frame, and a plurality of third transmission member, each of which acts on a corresponding fourth frame and is actuated by a preceding fourth frame.

According to the first embodiment of the invention, preferably the transmission members are integral with the second section of the structure and the frames, other than the first frame, are slidingly coupled to the second section of the structure.

By this arrangement, all the frames other than the first frame, and thus the corresponding lengths of cable held by these frames, slide along the second portion of the structure, while all the transmission members do not slide along the second portion of the structure when the two sections of the structure move each other.

According to the first embodiment of the invention, preferably said first and second frames comprise a corresponding toothed rack; said first transmission member comprises a first gear wheel and a second gear wheel, said first gear wheel engaging the toothed rack of the first frame and said second gear wheel engaging the toothed rack of the second frame.

Preferably, the first and second gear wheels of the first transmission member are rotatably mounted on the second portion of the structure.

When the first frame moves toward to, or away from, the second frame, namely when the two portions of the bridge move each other, the toothed rack of the first frame rotates the first gear wheel of the first transmission member that, in turn, rotates the second gear wheel of the first transmission member. The second gear wheel of the first transmission member engages the toothed rack of the second frame and causes the shifting of the same.

Preferably, said second frame comprises a further toothed rack and said third and fourth frames comprise corresponding toothed rack and further toothed rack; said second and third transmission members comprise a corresponding first gear wheel and a second gear wheel; the first gear wheel of the second transmission member engaging the further toothed rack of the second frame, said second gear wheel of the second and third transmission member engaging a corresponding toothed rack of the third and fourth frame and said first gear wheel of the third transmission engaging the further toothed rack of the third frame.

Preferably, also the first and second gear wheels of the second and third transmission members are rotatably mounted on the second portion of the structure.

By this structure, the shifting of the second frame causes the rotation of the first and second gear wheels of the second transmission member that, in turn, move the third frame. The shifting of the third frame causes the rotation of the first and second gear wheels of the third transmission member that, in turn, move the fourth frame.

Preferably, the toothed racks are provided at two opposite end portions of the second, third and fourth frame and at a first end portion of the first frame.

The first and second gear wheels of each transmission member are cinematically linked each other so that the rotation of the first gear wheels impart the rotation of the corresponding second gear wheels. This cinematic linkage defines said transmission ratio of the transmission members.

Preferably a corresponding secondary gear is integral and coaxial with each first and second gear wheel; the relative dimension of said secondary gears defining the transmission ratio of the transmission member. In this solution, the first and second gear wheels of each transmission member have the same diameter.

Preferably, the secondary gears of each transmission member are linked by a chain. Alternatively, the secondary gears of each transmission member are linked by transmission gears.

According to a first variant of the transmission members, preferably the first gear wheel of each transmission member is integral and coaxial with the second gear of the same transmission member; the diameter of the first gear wheel being different from the diameter of the corresponding second wheels gear.

The different diameters of the first and second gear wheel define the transmission ratio of the corresponding transmission member. In this solution, the first gear wheels and the second gears wheels directly engage the corresponding toothed racks.

According to a second variant of the transmission members, preferably all the frames comprise a toothed rack provided at one end portion thereof, and further toothed racks are provided on said second section (202) of the structure; each transmission member comprises a respective first gear wheel and a respective second gear wheel rotatably coupled to a corresponding one end of a frame opposite to the end provided with said toothed rack; each first gearwheel engaging a corresponding toothed rack of a frame and each second gear wheel engaging a corresponding further toothed rack of the second section.

Preferably, the first and second gearwheels are coaxial and are rotatably mounted to a second end of each frame opposite to the frame provided with the toothed rack.

By this structure, the first gear wheel rotates when the toothed rack of the frame engaging the first gear wheel moves. The rotation of the first gear wheel causes the rotation of the second gear wheel that, in turn, engages the further toothed rack, namely the toothed rack integral with the portion of the structure. The second gear wheel rolls on the second toothed rack and moves the frame to which the second gear wheel is rotatably coupled.

The different diameters of the first and second gear wheel define the transmission ratio of the corresponding transmission member. In this solution, the first gear wheels and the second gears wheels directly engage the corresponding toothed racks.

According to a second embodiment of the invention, preferably the second frame extends across the gap between the first and second section of the structure and is also mounted on the first section of the structure; said second frame being slidingly coupled to the first and second section of the structure.

Preferably, the system comprises a third frame mounted to the second section of the structure, acting on a related portion of the cable and movable with respect the second section of the structure; the system further comprising a second transmission member, positioned and acting between the second frame and the third frame, actuating the third frame and being actuated by the second frame.

Preferably, in this embodiment the system comprises a fourth frame mounted to the first section of the structure, acting on a related portion of the cable and movable with respect the first section of the structure; the system further comprising a third transmission member, positioned and acting between the second frame and the fourth frame, actuating the fourth frame and being actuated by the second frame.

Preferably, the first and second transmission members are integral with the second section of the structure and the third transmission member is integral with the first section of the structure.

By this arrangement, the first and second frames cross the gap between the two sections of the structure and the remaining frame are alternately mounted to the first and second section of the structure so as to slide along the corresponding portion of the structure. The transmission members do not slide along the corresponding section of the structure when the two sections of the structure move each other.

As in the first embodiment, preferably in the second embodiment of the invention said first and second frames comprise a corresponding toothed rack; said first transmission member comprises a first gear wheel and a second gear wheel, said first gear wheel engaging the toothed rack of the first frame and said second gear wheel engaging the toothed rack of the second frame.

Preferably, the first and second gear wheels of the first transmission member are rotatably mounted to the second portion of the structure and are coaxial.

When the first frame moves toward to, or away from, the second frame, namely when the two portions of the bridge move each other, the toothed rack of the first frame rotates the first gear wheel of the first transmission member that, in turn, rotates the second gearwheel of the first transmission member. The second gear wheel of the first transmission member engages the toothed rack of the second frame and causes the shifting of the same.

Preferably, in the second embodiment said second transmission member comprises a first gear wheel and a second gear wheel and said third frame comprises a toothed rack; said first gear wheel of the second transmission member being coaxial and integral with the second gear wheel of the first transmission member and said second gear wheel of the second transmission member engaging the toothed rack of the third frame.

Preferably, the first gear wheel of the second transmission member is actuated by the rotation of the first and the second gear wheel of the first transmission member. Preferably, between the first and second transmission members it is not interposed any frame. Preferably, the first and second transmission members are directly linked each other.

Preferably, the first gear wheel of the second transmission member is integral and coaxial with both the first and second gear wheels of the first transmission member.

Preferably, the first gear wheel of the first transmission member directly engages the toothed rack of the first frame and the second gear wheel of the first transmission member directly engages the toothed rack of the second frame.

Preferably, the second gear wheel of the second transmission member comprises a secondary gear coaxial and integral with the second gear wheel. The secondary gear and the first gear wheels of the second transmission member are linked by a chain. Alternatively, they are linked by transmission gears.

The different diameters of the secondary gear wheel and the first gear wheel of the second transmission member define the transmission ratio of the second transmission member.

The third transmission member of the fourth embodiment can be identical to any of the transmission members of the first embodiment.

According to the third embodiment of the invention, said first transmission member comprises a shaft pivotally hinged to the second section of the structure, a first sleeve pivotally hinged at one end of the first frame and slidingly coupled to said shaft; the first transmission member further comprising a second sleeve pivotally hinged at one end of the second frame and slidingly coupled to said shaft.

Preferably, said second and third transmission member comprise a respective shaft pivotally hinged to the second section of the structure, a respective first sleeve pivotally hinged at one end of the second frame and of the third frame and slidingly coupled to said shaft; the second and third transmission member further comprising a respective second sleeve pivotally hinged at one end of the third and fourth frame and slidingly coupled to said shaft.

Preferably, the first and second sleeves rotate around corresponding second and third pivot axes; said first, second and third pivot axes being parallel each other.

Preferably each second pivot axis is farther from the corresponding first pivot axis than the corresponding third pivot axis.

The ratio between the distance from a third pivot axis to the first pivot axis and from the corresponding second pivot axis to the first pivot axis remains unchanged when the frames moves each other.

This ratio defines the transmission ratio of the transmission member.

By this embodiment, when the two sections of the structure move each other, the first frame acts on the second frame by pulling or pushing the same. The sliding hinge between the first frame and the shaft allows the shaft to swivel around the first pivot axis. Accordingly, the sliding hinge between the second frame and the shaft allow the second frame to translate.

Further features and advantages of the present invention will appear more clearly from the following detailed description of preferred embodiments thereof, with reference to the annexed figures wherein:

## Brief description of the drawings

- Figures 1, 1a, 2 and 2a show a perspective view of a system for supporting a cable across two movable sections of a structure according to a first embodiment of the present invention;
- Figures 3, 3a, 4 and 4a show a perspective view of a system according to a second embodiment of the present invention;
- Figures 5 and 6 show some variants of the transmission members according to the invention;
- Figures 7, 8 and 9 show a schematic view of a system according to a third embodiment of the present invention.

## Detailed description

A system for supporting a cable, such as a medium and/or high voltage electric cable 3, across two movable sections of a structure 200 according to the present invention is indicated with reference number 100 in the annexed figures.

The system 100 can be advantageously used when the structure is a bridge or a viaduct having a first 201 and a second section 202 movable each other, for example due to traffic, seismic events and/or thermal expansions, and spaced apart by a gap 5.

The cable 3 is supported between a first support 51 fixed to the first section 201 of the structure 200 and a second support 52 fixed to the second section 202 of the structure 200. The length of cable held by the two supports 51, 52 is loose for allowing a relative movement of the two sections 201, 202 of the structure 200 without tearing off the cable.

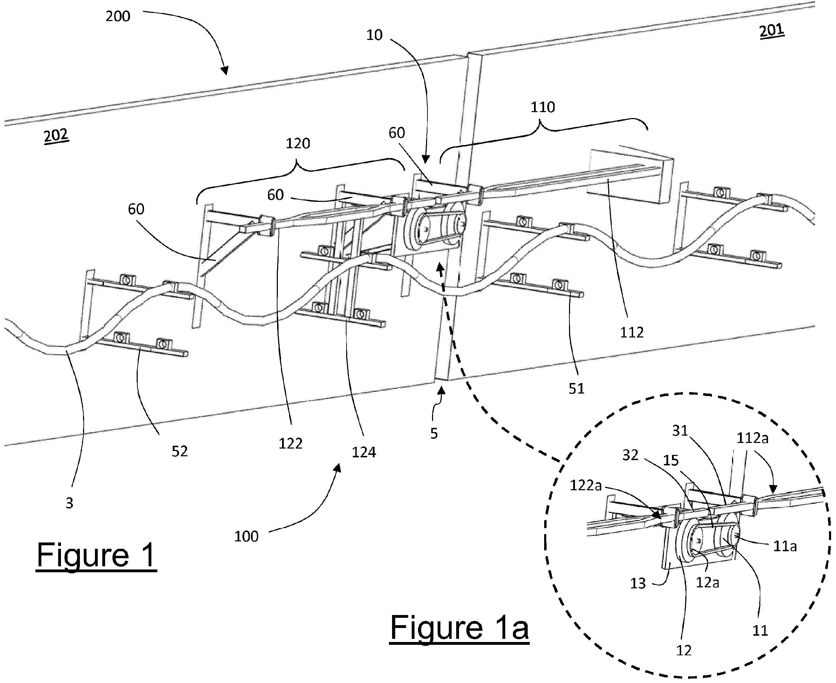

Figure 1 schematically shows a system 100 according to a first embodiment of the present invention.

The system 100 comprises a first frame 110 fixedly mounted to the first section 201 of the structure 200 and a second frame 120, movable with respect to the first frame 110 and mounted to the second section 202 of the structure 200.

The first frame 110 comprises a beam 112 extending across the gap 5 between the two sections 201, 202 of the structure 200 and protruding over the second section 202 of the structure 200.

The second frame 120 comprises a cable supporting structure 124. Preferably, the supporting structure 124 vertically abuts from a beam 122 of the second frame 120 for supporting a portion of the cable 3. The lengths of cable 3 extending between the first support 51 and the supporting structure 124 and between the supporting structure 124 and the second support 52 forms two festoons.

The second frame 120 is slidingly mounted to the second section 202 of the structure 200. The second frame 120 is slidingly coupled to two resting members 60 fixedly mounted to the second section 202 of the structure. The resting members 60 protrude away from the second section 202 of the structure in order to place the second frame 120 at a distance from the surface of the second section 202 of the structure.

The beam 122 of the second frame 120 has two opposite end portions 122a, 122b. Each resting member 60 acts on a corresponding end portion 122a, 122b of the beam 122.

The first frame 110 is slidingly coupled to a further resting member 60 fixedly mounted to the second section 202 of the structure 200 and acting on an end portion 112a of the beam 112 extending over the second section 202, so that the first frame 110 is slidingly supported at the second section 202 of the structure 200.

Preferably, both the first 110 and second frame 120 are metal frameworks.

Between the first frame 110 and the second frame 120, a first transmission member 10 integral with the second section 202 of the structure 200 is placed. The first transmission member 10 is actuated by a shift of the first frame 110 due to a relative movement of the two sections 201, 202 of the structure 200. Advantageously, the first transmission member 10 actuates the second frame 120 when it is actuated by the first frame 110.

Advantageously, the operating principle of the first transmission member 10 is completely passive, namely it does not require any electric, hydraulic, pneumatic or magnetic energy for working.

Preferably, the first transmission member 10 mechanically converts the movement of the first frame 110 into a movement of the second frame 120.

The first transmission member 10 has a transmission ratio that correlates the movement of the first frame 110 to the movement of the second frame 120. The transmission ratio is numerically defined as the movement of the first frame 110 divided by the movement of the second frame 120.

The overall movement between the two sections 201, 202 of the structure 200 is thus shared between the two lengths of cable 3, namely the two festoons, extending between the first support 51 and the supporting structure 124 and between the latter and the second support 52.

Indeed, the transmission member 10 determines the displacement of the second frame 120 with respect the first frame 110 so determining the displacements of the two lengths of cable 3 held between the first support 51 and the supporting structure 124 and between the latter and the second support 52.

In particular, the first support 51 moves integral with the first section 201 of the structure 200, the second support 52 moves integral with the second section 202 of the structure and the supporting structure 124 slides with the second frame 120.

When the two sections 201, 202 of the structure 200 get closed (or move away) the first 51 and second support 52 get closed (of move away) of the same quantity. The supporting member 124 moves according to the movement imparted by the first frame 110 through the first transmission member 10.

Preferably, the transmission ratio of the first transmission member 10 is set so that the displacements of the two lengths of cable 3 are identical, namely they extend or shorten of the same quantity.

In this way, the relative movement of the two sections 201, 202 of the structure 200 is evenly shared between the two festoons of cable 3.

For example, the transmission ratio is preferably of 2.00 to obtain the following displacements in case of a relative movement of 1500 mm of the two sections 201, 202 of the structure 200.

| Cable support | Cable support movement | Movement respect the preceding cable support | Frame | Frame movement | Movement respect the preceding frame |
|---|---|---|---|---|---|
| First support (51) | 1500 | - | First frame (110) | 1500 | - |
| Supporting structure second frame (124) | 750 | 750 | Second frame (120) | 750 | 750 |
| Second support (52) | 0 | 750 | | | |

As shown in the example of figure 1a, the first transmission member 10 comprises a supporting plate 13 fixedly mounted to the second section 202 of the structure 200. A first 11 and a second gear wheel 12 are rotatably mounted on the plate 13. The first gear wheel 11 and the second gear wheel 12 are integral and coaxial with a corresponding secondary gear 11a, 12a. The secondary gears 11a, 12a are cinematically linked each other, for example by a chain 15 as depicted in figure 1 or by transmission gears.

The first frame 110 comprises a toothed rack 31 provided on the end portion 112a of the beam 112. The toothed rack 31 engages the first gear wheel 11 of the first transmission member 10, so that a movement of the first frame 110 causes a rotation of the first gear wheel 11.

The second frame 120 comprises a toothed rack 31 provided on the end portion 122a of the beam 122 facing the first frame. The toothed rack 31 engages the second gear wheel 12 of the first transmission member 10, so that a rotation of the second gear 12 causes a movement of the second frame 120.

The rotation axes of the first 11 and second gear wheel 12 are parallel each other and perpendicular to the sliding direction of the first 110 and second frame 120.

Preferably, the first 11 and second gear wheel 12 presents the same diameters and have the same number of teeth, so that the transmission ratio is given by the ratio between the diameters (or the number of teeth) of the secondary gears 11a, 12a.

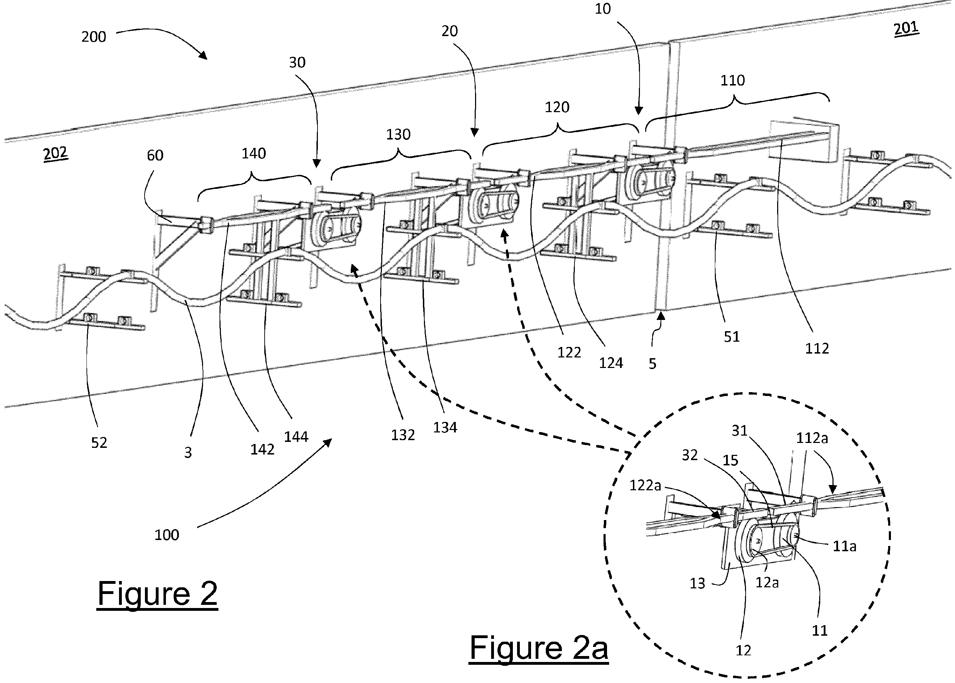

Figure 2 illustrates a variant of the embodiment of figure 1. The system 100 of figure 2 comprises a third frame 130, movably mounted to the second section 202 of the structure 201. The third frame 130 is adjacent and spaced apart from the second frame 120 and is movable with respect to the second frame 120.

The first 110 and second frame 120, as well as the first transmission member 10, are identical to the first 110 and second frame 120 and to the first transmission member 10 of the embodiment of figure 1.

The third frame 130 comprises a supporting structure 134 for supporting a portion of the cable 3. Preferably, the supporting structure 134 vertically abuts from a beam 132 of the third frame 130. The supporting structure 134 is positioned between the supporting structure 124 of the second frame 120 and the second support 52, so that the cable 3 forms a further festoon.

The third frame 130 is slidingly mounted to the second section 202 of the structure 200. To this end, the third frame 130 is slidingly coupled to two resting members 60 fixedly mounted to the second section 202 of the structure. The resting members 60 protrude away from the second section 202 of the structure in order to place the third frame 130 at a distance from the surface of the second section 202 of the structure.

The beam 132 of the third frame 130 has two opposite end portions. Each resting member 60 acts on a corresponding end portion of the beam 132.

The third frame 130 is structurally identical to the second frame 120.

In the variant of figure 2, the system further comprises a fourth frame 140, movably mounted to the second section 202 of the structure 201. The fourth frame 140 is adjacent and spaced apart from the third frame 130 and is movable with respect to the third frame 130.

The fourth frame 140 comprises a supporting structure 144 for supporting a portion of the cable 3. Preferably, the supporting structure 144 vertically abuts from a beam 142 of the fourth frame 140. The supporting structure 144 is positioned between the supporting structure 134 of the third frame 130 and the second support 52, so that the cable 3 forms four festoons between the first support 51 and the second support 52.

The fourth frame 140 is slidingly mounted to the second section 202 of the structure 200. To this end, the fourth frame 140 is slidingly coupled to two resting members 60 fixedly mounted to the second section 202 of the structure. The resting members 60 protrude away from the second section 202 of the structure in order to place the fourth frame 140 at a distance from the surface of the second section 202 of the structure.

The beam 142 of the fourth frame 140 has two opposite end portions. Each resting member 60 acts on a corresponding end portion of the beam 142.

The fourth frame 140 is structurally identical to the second 120 and third frame 130.

Between the second frame 120 and the third frame 130, a second transmission member 20 integral with the second section 202 of the structure 200 is placed. The second transmission member 20 is actuated by a shift of the second frame 120 and actuates the third frame 130.

Advantageously, the operating principle of the second transmission member 20 is completely passive, namely it does not require any electric, hydraulic, pneumatic or magnetic energy for working.

Preferably, the second transmission member 20 mechanically converts the movement of the second frame 120 into a movement of the third frame 130.

The second transmission member 20 has a transmission ratio that correlates the movement of the second frame 120 to the movement of the third frame 130. The transmission ratio is defined as the movement of the second frame 120 divided by the movement of the third frame 130.

Similarly, between the third frame 130 and the fourth frame 140, a third transmission member 30 integral with the second section 202 of the structure 200 is placed. The third transmission member 30 is actuated by a shift of the third frame 130 and actuates the fourth frame 140.

Advantageously, the operating principle of the third transmission member 30 is completely passive, namely it does not require any electric, hydraulic, pneumatic or magnetic energy for working.

Preferably, the third transmission member 30 mechanically converts the movement of the third frame 130 into a movement of the fourth frame 140.

The third transmission member 30 has a transmission ratio that correlates the movement of the third frame 130 to the movement of the fourth frame 140. The transmission ratio is defined as the movement of the third frame 130 divided by the movement of the fourth frame 140.

The overall movement between the two sections 201, 202 of the structure 200 is thus shared between the four lengths of cable 3, namely the four festoons, extending between the first support 51 and the second support 52.

Indeed, the first support 51 moves integral with the first section 201 of the structure 200 and the second support 52 moves integral with the second section 202 of the structure 200, while the supporting structure 124 of the second frame 120, the supporting structure 134 of the third frame 130, the supporting structure 144 of the fourth frame 120 slide with respect the first 201 and second sections 202 of the structure 200.

When the two sections 201, 202 of the structure 200 get closed (or move away) the first 51 and second support 52 get closed (of move away) of the same quantity. The supporting member of each frame moves according to the movement of correspond frame given by corresponding transmission member.

Preferably, the transmission ratio of the first transmission member 10 is different from the transmission ratio of the second transmission member 20 that, in turn, is different from the transmission ratio of the third transmission member 30.

In the preferred embodiment, the transmission ratios of the first 10, second 20 and third transmission member 30 are set so that the displacements of the four lengths of cable 3 are identical, namely they extend or shorten of the same quantity.

In this way, the relative movement of the two sections 201, 202 of the structure 200 is evenly shared between the four festoons of cable 3.

Preferably, the transmission ratio TR of each transmission member can be set as:

$$TR = (POS + 1) / (POS),$$

wherein POS is an integer number indicating the position of the relevant transmission member along a development direction of the system.

In the above formula it has to be considered that the first transmission member 10 is in the last position, and the third transmission member 30 is considered as being in the first position.

In the example of figure 2, with four frames and three transmission members, the transmission ratio TR of each transmission member, according to the above formula, can be summarized in the following table:

| Transmission member | Reference number in fig. 2 | Position of the transmission member (POS) | Transmission ratio (TR) |
| --- | --- | --- | --- |
| First | 10 | 3 | 1.33 |
| Second | 20 | 2 | 1.50 |
| Third | 30 | 1 | 2.00 |

Therefore, assuming an overall movement of 1500 millimetres of the two sections 201, 202 of the structure 200, the overall displacement of any frame 120, 130, 140 is given by the displacement of the preceding frame divided by the transmission ratio of the transmission member acting between the two frames.

In the example of figure 2, the displacement of each frame is summarised in the following table that also indicates the relative displacement between each frame and the preceding frame. The following table further summarises the displacement of each cable support with respect to section 202 of structure 200.

| Cable support | Cable support movement | Movement respect the preceding cable support | Frame | Frame movement | Movement respect the preceding frame |
| --- | --- | --- | --- | --- | --- |
| First support (51) | 1500 | - | First frame (110) | 1500 | - |
| Supporting structure second frame (124) | 1125 | 375 | Second frame (120) | 1125 | 375 |
| Supporting structure third frame (134) | 750 | 375 | Third frame (130) | 750 | 375 |
| Supporting structure fourth frame (144) | 375 | 375 | Fourth frame (140) | 375 | 375 |
| Second support (52) | 0 | 375 | | | |

Therefore, in the above example the overall relative movement of 1500 millimetres of the two sections of the structure is compensated by relative displacements of 375 millimetres of each frame. This means that each length of cable 3 extending between two relative cable support is subjected to a movement of just 375 millimetres.

As shown in the example of figure 2a, the second 20 and third transmission members 30 comprise a corresponding supporting plate 13 fixedly mounted to the second section 202 of the structure 200. A first 11 and a second gear wheel 12 are rotatably mounted on each the plate 13. The first gear wheel 11 and the second gear wheel 12 are integral and coaxial with a corresponding secondary gear 11a, 12a. The secondary gears 11a, 12a are cinematically linked each other, for example by a chain 15 or by transmission gears.

The second frame 120 comprises a further toothed rack 31 provided on the end portion of the beam 122 opposite to the end portion engaging the first transmission member 10. This further toothed rack 31 engages the first gear wheel 11 of the second transmission member 20, so that a movement of the second frame 120 causes a rotation of the first gear wheel 11.

The third frame 130 comprises a toothed rack 31 provided on the end portion of the beam 132 facing the second frame 120. The toothed rack 31 engages the second gear wheel 12 of the second transmission member 20, so that a rotation of the second gear 12 causes a movement of the third frame 130.

The rotation axes of the first 11 and second gear wheel 12 are parallel each other and perpendicular to the sliding direction of the second 120 and third frame 130.

Preferably, the first 11 and second gear wheel 12 of the second transmission member 20 present the same diameters and have the same number of teeth, so that the transmission ratio is given by the ratio between the diameters (or the number of teeth) of the secondary gears 11a, 12a.

Similarly, the third frame 130 comprises a further toothed rack 31 provided on the end portion of the beam 132 opposite to the end portion engaging the second transmission member 20. This further toothed rack 31 engages the first gear wheel 11 of the third transmission member 30, so that a movement of the third frame 130 causes a rotation of the first gear wheel 11.

The fourth frame 140 comprises a toothed rack 31 provided on the end portion of the beam 142 facing the third frame 130. The toothed rack 31 engages the second gear wheel 12 of the third transmission member 30, so that a rotation of the second gear 12 causes a movement of the fourth frame 140.

The rotation axes of the first 11 and second gear wheel 12 are parallel each other and perpendicular to the sliding direction of the third 130 and fourth frame 140.

Preferably, the first 11 and second gear wheel 12 of the third transmission member 30 present the same diameters and have the same number of teeth, so that the transmission ratio is given by the ratio between the diameters (or the number of teeth) of the secondary gears 11a, 12a.

Although not illustrated, further frames, identical to the fourth frame 140 can be provided adjacent and movable each other, so as to form a sequence of frames adjacent and spaced apart from the fourth frame 140. Further transmission members identical to the third transmission member 30 are placed between and connecting two successive further frames.

Any case, the number of transmission members of the system is equal to the number of frames minus one.

The frames are thus arranged in series as well as the transmission members, so that each frame and each transmission member has its own position along the system 100.

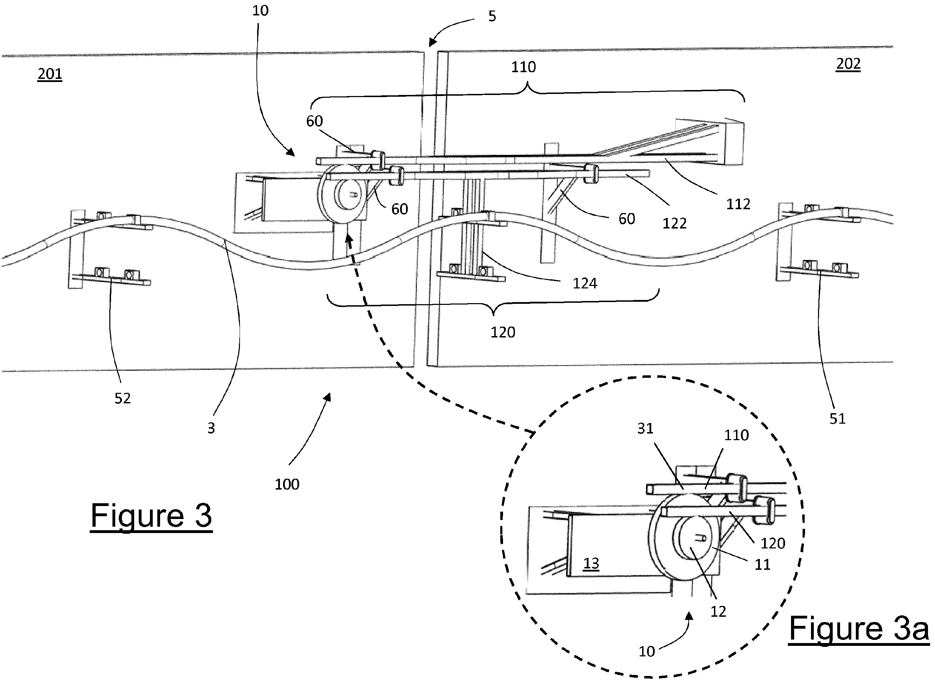

Figure 3 schematically shows a system 100 according to a second embodiment of the present invention.

In this embodiment, the first frame 110 is identical to the first frame of the first embodiment.

The second frame 120 is placed across the gap 5 between the two sections 201, 202 of the structure 200, as the first frame 110. Differently from the first frame 110 that is fixedly mounted to the first section 201, the second frame 120 is slidingly coupled to the first section 201. The second frame 120 is slidingly supported at the second section 202 of the structure 200 too. In particular, the second frame 120 is slidingly coupled to the first section 201 and to the second section 202 through corresponding resting member 60 integral, respectively, with the first section 201 and the second section 202.

The resting members 60 protrude away from the first 201 and second section 202 of the structure in order to place the second frame 120 at a distance from the surface of the first and second section 202 of the structure 200.

The second frame comprises a beam 122 having two opposite end portions. Each resting member 60 acts on a corresponding end portion of the beam 122.

The second frame 120 comprises a supporting structure 124 for supporting a portion of the cable 3. Preferably, the supporting structure 124 vertically abuts from a beam 122 of the second frame 120. The supporting structure 124 is positioned between the first 51 and the second support 52, so that the cable 3 forms two festoons.

Differently from the first embodiment, the second frame 120 and the first frame 110 are substantially superposed, namely both of them cross the gap 5 between the two sections 201, 202 of the structure 200.

Between the first frame 110 and the second frame 120, a first transmission member 10 integral with the second section 202 of the structure 200 is placed. The first transmission member 10 is actuated by a shift of the first frame 110 due to a relative movement of the two sections 201, 202 of the structure 200. The first transmission member 10 actuates the second frame 120 when it is actuated by the first frame 110.

As for the first embodiment, the operating principle of the first transmission member 10 is completely passive, namely it does not require any electric, hydraulic, pneumatic or magnetic energy for working.

The first transmission member 10 mechanically converts the movement of the first frame 110 into a movement of the second frame 120.

The first transmission member 10 has a transmission ratio that correlates the movement of the first frame 110 to the movement of the second frame 120. The transmission ratio is defined as the movement of the first frame 110 divided by the movement of the second frame 120.

The overall movement between the two sections 201, 202 of the structure 200 is thus shared between the two lengths of cable 3, namely the two festoons, extending between the first support 51 and the supporting structure 124 and between the latter and the second support 52.

Indeed, the transmission member 10 determines the displacement of the second frame 120 with respect the first frame 110 so determining the displacements of the two lengths of cable 3 held between the first support 51 and the supporting structure 124 and between the latter and the second support 52.

When the two sections 201, 202 of the structure 200 get closed (or move away) the first 51 and second support 52 get closed (of move away) of the same quantity. The supporting member 124 moves according to the movement imparted by the first frame 110 through the first transmission member 10.

As for the first embodiment, the transmission ratio of the first transmission member 10 is preferably set so that the displacements of the two lengths of cable 3 are identical, namely they extend or shorten of the same quantity.

In this way, the relative movement of the two sections 201, 202 of the structure 200 is evenly shared between the two festoons of cable 3.

A shown in the example of figure 3a, the first transmission member 10 is mounted on a supporting plate 13 fixedly mounted to the second section 202 of the structure 200. The first transmission member 10 comprises a first 11 and a second gear wheel 12 rotatably mounted on the plate 13. The first gear wheel 11 is coaxial and integral with the second gear wheel 12, so that the first 11 and second gear wheel 12 rotates together.

The first gear wheel 11 engages a toothed rack 31 of the first frame 110, while the second gear wheel 12 engages a toothed rack 31 of the second frame 120.

The toothed rack 31 of the first frame 110 is provided at the end portion of its beam 112, while the toothed rack 31 of the second frame 120 is provided at the end portion of its beam 122. The two end portions of the first 110 and second frame 120 are superposed each other.

The diameters of the first 11 and second gear wheel 12 are different and the ratio between the two diameters defines the transmission ratio of the first transmission member 10.

The rotation axes of the first 11 and second gear wheel 12 are parallel each other and perpendicular to the sliding direction of the first 110 and second frame 120.

When the first frame 110 moves relative to the second section 201 of the structure 200, the toothed rack 31 of the first frame 110 rotates the first gear wheel 11 and, thus, the second gear wheel 12. The latter engages the toothed rack 31 of the second frame 120 moving the same.

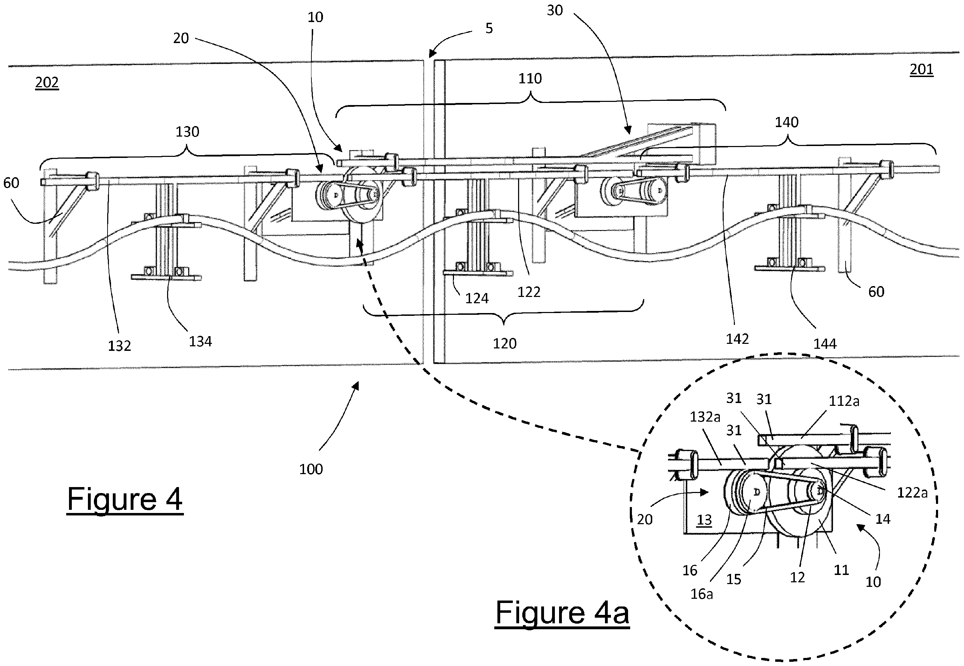

Figure 4 represents a variant of the second embodiment of figure 3.

According to this variant, the system comprises a third 130 and a fourth frame 140. The first 110 and second frame 120, as well as the first transmission member 10 remains unchanged.

The third frame 130 is movably mounted to the second section 202 of the structure 201. The third frame 130 is adjacent and spaced apart from the second frame 120 and is movable with respect to the second frame 120.

The third frame 130 comprises a supporting structure 134 for supporting a portion of the cable 3. Preferably, the supporting structure 134 vertically abuts from a beam 132 of the third frame 130. The supporting structure 134 is positioned between the supporting structure 124 of the second frame 120 and the second support 52, so that the cable 3 forms a further festoon.

The third frame 130 is slidingly mounted to the second section 202 of the structure 200. To this end, the third frame 130 is slidingly coupled to two resting members 60 fixedly mounted to the second section 202 of the structure. The resting members 60 protrude away from the second section 202 of the structure in order to place the third frame 130 at a distance from the surface of the second section 202 of the structure.

The beam 132 of the third frame 130 has two opposite end portions. Each resting member 60 acts on a corresponding end portion of the beam 132.

The third frame 130 is structurally identical to the second frame 120.

Differently from the first embodiment of figure 2, the fourth frame 140 is movably mounted to the first section 201 of the structure 200. The fourth frame 140 is adjacent and spaced apart from the second frame 120 and is movable with respect to the second frame 120.

In this embodiment, the second frame 120 is adjacent, at a first end, to the third frame 130 and, at an opposite end, to the fourth frame 140, as clearly illustrated in figure 4.

The fourth frame 140 comprises a supporting structure 144 for supporting a portion of the cable 3. Preferably, the supporting structure 144 vertically abuts from a beam 142 of the fourth frame 140. The supporting structure 144 is positioned between the supporting structure 124 of the second frame 120 and the first support 51, so that the cable 3 forms four festoons.

In this embodiment, the lengths of cable 3 held by the system 100 extend substantially fairly on both the first 201 and second section 202 of the structure 200. In the first embodiment (see figure 2), the lengths of cable 3 held by the system 100 extend largely on the second section 202 of the structure 200.

The fourth frame 140 is slidingly mounted to the first section 201 of the structure 200. To this end, the fourth frame 140 is slidingly coupled to two resting members 60 fixedly mounted to the first section 201 of the structure. The resting members 60 protrude away from the first section 201 of the structure in order to place the fourth frame 140 at a distance from the surface of the first section 201 of the structure.

The beam 142 of the forth frame 140 has two opposite end portions. Each resting member 60 acts on a corresponding end portion of the beam 142.

The fourth frame 140 is structurally identical to the second 120 and third frame 130.

Between the second frame 120 and the third frame 130, a second transmission member 20 integral with the second section 202 of the structure 200 is placed. The second transmission member 20 is actuated by a shift of the second frame 120 and actuates the third frame 130.

Also in this case, the operating principle of the second transmission member 20 is completely passive, namely it does not require any electric, hydraulic, pneumatic or magnetic energy for working.

The second transmission member 20 mechanically converts the movement of the second frame 120 into a movement of the third frame 130.

The second transmission member 20 has a transmission ratio that correlates the movement of the second frame 120 to the movement of the third frame 130. The transmission ratio is defined as the movement of the second frame 120 divided by the movement of the third frame 130.

Between the second frame 120 and the fourth frame 140, a third transmission member 30 integral with the first section 201 of the structure 200 is placed. The third transmission member 30 is actuated by a shift of the second frame 120 and actuates the fourth frame 140.

Therefore, the second frame 120 acts, via the second 20 and third transmission member 30, on both the third 130 and fourth frame 140.

The operating principle of the third transmission member 30 is completely passive, namely it does not require any electric, hydraulic, pneumatic or magnetic energy for working.

The third transmission member 30 mechanically converts the movement of the third frame 130 into a movement of the fourth frame 140.

The third transmission member 30 has a transmission ratio that correlates the movement of the second frame 120 to the movement of the fourth frame 140. The transmission ratio is defined as the movement of the second frame 120 divided by the movement of the fourth frame 140.

The overall movement between the two sections 201, 202 of the structure 200 is thus shared between the four lengths of cable 3, namely the four festoons, extending between the first support 51 and the second support 52.

Indeed, the first support 51 moves integral with the first section 201 of the structure 200 and the second support 52 moves integral with the second section 202 of the structure 200, while the supporting structure 124 of the second frame 120, the supporting structure 134 of the third frame 130, the supporting structure 144 of the fourth frame 120 slide with respect the first 201 and second sections 202 of the structure 200.

When the two sections 201, 202 of the structure 200 get closed (or move away) the first 51 and second support 52 get closed (of move away) of the same quantity. The supporting member of each frame moves according to the movement of correspond frame given by corresponding transmission member.

Preferably, the transmission ratio of the first transmission member 10 is different from the transmission ratio of the second transmission member 20 that, in turn, is different from the transmission ratio of the third transmission member 30.

Prefereably, the transmission ratios of the first 10, second 20 and third transmission member 30 are set so that the displacements of the four lengths of cable 3 are identical, namely they extend or shorten of the same quantity.

In this way, the relative movement of the two sections 201, 202 of the structure 200 is evenly shared between the four festoons of cable 3.

Structurally, the second transmission member 20 is mounted on the same plate 13 on which it is mounted the first transmission member 10, as illustrated in figure 4a. The second transmission member 20 comprises a first gear wheel 14 and a second gear wheel 16 rotatably mounted on the plate 13. The first gear wheel 14 is integral and coaxial with the first 11 and second gear wheel 12 of the first transmission member 10, so that the rotation of the latter causes the rotation of the first gear wheel 14 of the second transmission member 20.

The second gear wheel 16 is integral and coaxial with a secondary gear 16a. The secondary gear 16a is cinematically linked to the first gear wheel 14, for example by a chain 15 or by transmission gears.

The rotation of the first gear wheel 14 causes the rotation of the secondary gear 16a, that, in turn rotates the second gear wheel 16.

The third frame 130 comprises a toothed rack 31 provided on the end portion 132a facing the second frame 120. This toothed rack 31 engages the second gear wheel 16 of the second transmission member 20, so that a rotation of the first gear wheel 14 causes a movement of the third frame 130.

The diameter of the first gear wheel 14 is different from the diameter of the secondary gear 16a of the second gear wheel and the ratio between the two diameters defines the transmission ratio of the second transmission member 20.

The rotation axes of the first 14 and second gear wheel 16 are parallel each other and perpendicular to the sliding direction of the frames.

The third transmission members 30 is similar to that shown in figure 2a and 4a and it comprises a supporting plate 13 fixedly mounted to the first section 201 of the structure 200. A first and a second gear wheel are rotatably mounted on the plate. The first gear wheel and the second gear wheel are integral and coaxial with a corresponding secondary gear. The secondary gears, are cinematically linked each other, for example by a chain or by transmission gears.

The second frame 120 comprises a further toothed rack 31 provided on the end portion 122b of the beam 122 opposite to the end portion 122a engaging the first transmission member 10. This further toothed rack 31 engages the first gear wheel 11 of the third transmission member 30, so that a movement of the second frame 120 causes a rotation of the first gear wheel 11.

The fourth frame 140 comprises a toothed rack 31 provided on the end portion of the beam 142 facing the second frame 120. The toothed rack 31 engages the second gear wheel 12 of the third transmission member 30, so that a rotation of the second gear 12 causes a movement of the fourth frame 140.

The rotation axes of the first 11 and second gear wheel 12 are parallel each other and perpendicular to the sliding direction of the second 120 and fourth frame 140.

Preferably, the first 11 and second gear wheel 12 of the third transmission member 30 present the same diameters and have the same number of teeth, so that the transmission ratio is given by the ratio between the diameters (or the number of teeth) of the secondary gears 11a, 12a.

Although not illustrated, further frames, identical to the fourth frame 140, can be provided adjacent and movable each other in a row extending away from the fourth frame, so as to form a sequence of frames adjacent and spaced apart from the fourth frame 140. Further transmission members identical to the third transmission member 30 are placed between and connecting two successive further frames.

Accordingly, further frames, identical to the third frame 130, can be provided adjacent and movable each other in a row extending away from the third frame, so as to form a sequence of frames adjacent and spaced apart from the third frame 130. Further transmission members identical to the third transmission member 30 are placed between and connecting two successive further frames.

Any case, the number of transmission members of the system is equal to the number of frames minus one.

The frames are arranged on both the first 201 and second section 202 of the structure 200 so that the lengths of cable 3 festooned between the first 51 and second support 52 are fairly provided on both sections 201, 202 of the structure 200.

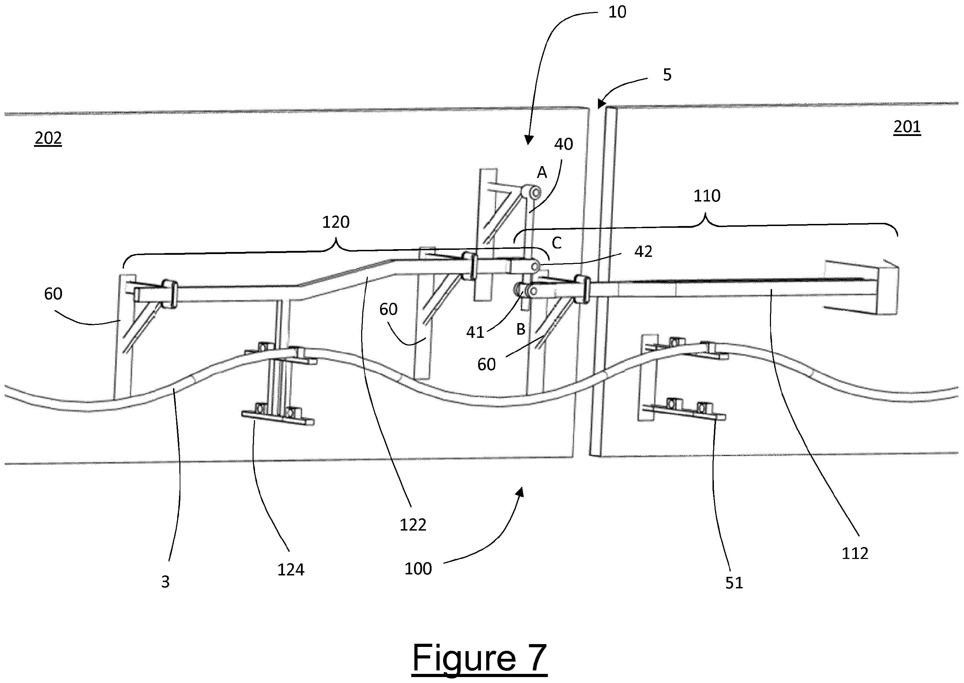

Figure 7 schematically shows a system according to a third embodiment of the present invention.

In this embodiment, the system 100 comprises a first frame 110 fixedly mounted to the first section 201 of the structure 200 and a second frame 120, movable with respect to the first frame 110 and mounted to the second section 202 of the structure 200.

The first frame 110 comprises a beam 112 extending across the gap 5 between the two sections 201, 202 of the structure 200 and protruding over the second section 202 of the structure 200.

The first frame 110 is slidingly coupled to a further resting member 60 fixedly mounted to the second section 202 of the structure 200 so that the first frame 110 is slidingly supported at the second section 202 of the structure 200.

The second frame 120 comprises a supporting structure 124. Preferably, the cable supporting structure 124 vertically abuts from a beam 122 of the second frame 120 for supporting a portion of the cable 3. The lengths of cable 3 extending between the first support 51 and the supporting structure 124 and between the supporting structure 124 and the second support (not shown) forms two festoons.

The second frame 120 is slidingly mounted to the second section 202 of the structure 200. To this end, the second frame 120 is slidingly coupled to two resting members 60 fixedly mounted to the second section 202 of the structure. The resting members 60 protrude away from the second section 202 of the structure in order to place the second frame 120 at a distance from the surface of the second section 202 of the structure.

The beam 122 of the second frame 120 has two opposite end portions. Each resting member 60 acts on a corresponding end portion of the beam 122.

The first frame 110 is slidingly coupled to a further resting member 60 fixedly mounted to the second section 202 of the structure 200 and acting on an end portion of the beam 112 extending over the second section 202, so that the first frame 110 is slidingly supported at the second section 202 of the structure 200.

Preferably, both the first 110 and second frame 120 are metal frameworks.

Between the first frame 110 and the second frame 120, a first transmission member 10 is placed. The first transmission member 10 is actuated by a shift of the first frame 110 due to a relative movement of the two sections 201, 202 of the structure 200. Advantageously, the first transmission member 10 actuates the second frame 120 when it is actuated by the first frame 110.

Also in this embodiment, the operating principle of the first transmission member 10 is completely passive, namely it does not require any electric, hydraulic, pneumatic or magnetic energy for working.

Preferably, the first transmission member 10 mechanically converts the movement of the first frame 110 into a movement of the second frame 120.

The first transmission member 10 has a transmission ratio that correlates the movement of the first frame 110 to the movement of the second frame 120. The transmission ratio is defined as the movement of the first frame 110 divided by the movement of the second frame 120.

The overall movement between the two sections 201, 202 of the structure 200 is thus shared between the two lengths of cable 3, namely the two festoons, extending between the first support 51 and the supporting structure 124 and between the latter and the second support (not shown).

Indeed, the transmission member 10 determines the displacement of the second frame 120 with respect the first frame 110 so determining the displacements of the two lengths of cable 3 held between the first support 51 and the supporting structure 124 and between the latter and the second support (not shown).

In particular, the first support 51 moves integral with the first section 201 of the structure 200, the second support moves integral with the second section 202 of the structure and the supporting structure 124 slides with respect to the second frame 120.

When the two sections 201, 202 of the structure 200 get closed (or move away) the first 51 and second support 52 get closed (of move away) of the same quantity. The supporting member 124 moves according to the movement imparted by the first frame 110 through the first transmission member 10.

Preferably, the transmission ratio of the first transmission member 10 is set so that the displacements of the two lengths of cable 3 are identical, namely they extend or shorten of the same quantity.

In this way, the relative movement of the two sections 201, 202 of the structure 200 is evenly shared between the two festoons of cable 3.

The first transmission member 10 comprises a shaft 40 pivotally hinged to the second section 202 of the structure 200 around a first pivot axis A. The first transmission member 10 further comprises a first sleeve 41 provided at one end of the beam 112 of the first frame 110. The shaft 40 is slidingly inserted into the first sleeve 41. The first sleeve 41 is hinged to the beam 112 of the first frame 110 around a second pivot axis B. The first pivot axis A is parallel to the second pivot axis B and perpendicular to the sliding direction of the first frame respect the second section 202 of the structure 200.

The first transmission member 10 further comprises a second sleeve 42 provided at one end of the beam 122 of the second frame 120. The shaft 40 is also slidingly inserted into the second sleeve 42. The second sleeve 42 is hinged to the beam 122 of the second frame 120 around a third pivot axis C. The first pivot axis A is parallel to the third pivot axis C.

The movement of the first frame 110 with respect the second section 201 of the structure 200 rotates the shaft 40. This rotation determines the translation of the second frame 120. During the rotation of the shaft 40, the hinges between the first 41 and second sleeve 42 and the corresponding beam allow the first 41 and second sleeve 42 to slide along the shaft. Therefore, the distances between the second B and third pivot axis C from the first pivot axis A change. However, the ratio between the distances of the second pivot axis B from the first pivot axis A and of the third axis C from the first pivot axis A remains unchanged.

Preferably, the ratio between the distances of the second pivot axis B from the first pivot axis A and of the third axis C from the first pivot axis A determines the transmission ratio of the first transmission member 10.

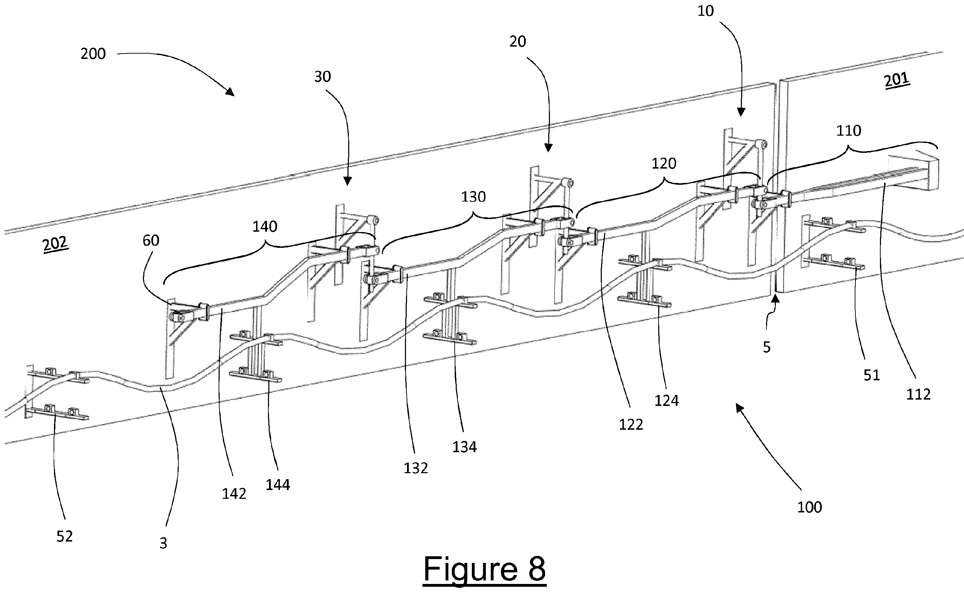

Figure 8 illustrates a variant of the embodiment of figure 7. The system 100 of figure 8 comprises a third frame 130, movably mounted to the second section 202 of the structure 201. The third frame 130 is adjacent and spaced apart from the second frame 120 and is movable with respect to the second frame 120.

The first 110 and second frame 120, as well as the first transmission member 10 are identical to the first 110 and second frame 120 and to the first transmission member 10 of the embodiment of figure 7.

The third frame 130 comprises a supporting structure 134 for supporting a portion of the cable 3. Preferably, the supporting structure 134 vertically abuts from a beam 132 of the third frame 130. The supporting structure 134 is positioned between the supporting structure 124 of the second frame 120 and the second support 52, so that the cable 3 forms a further festoon.

The third frame 130 is slidingly mounted to the second section 202 of the structure 200. To this end, the third frame 130 is slidingly coupled to two resting members 60 fixedly mounted to the second section 202 of the structure. The resting members 60 protrude away from the second section 202 of the structure in order to place the third frame 130 at a distance from the surface of the second section 202 of the structure.

The beam 132 of the third frame 130 has two opposite end portions. Each resting member 60 acts on a corresponding end portion of the beam 132.

The third frame 130 is structurally identical to the second frame 120.

In the variant of figure 8, the system further comprises a fourth frame 140, movably mounted to the second section 202 of the structure 201. The fourth frame 140 is adjacent and spaced apart from the third frame 130 and is movable with respect to the third frame 130.

The fourth frame 140 comprises a supporting structure 144 for supporting a portion of the cable 3. Preferably, the supporting structure 144 vertically abuts from a beam 142 of the fourth frame 140. The supporting structure 144 is positioned between the supporting structure 134 of the third frame 130 and the second support 52, so that the cable 3 forms four festoons between the first support 51 and the second support 52.

The fourth frame 140 is slidingly mounted to the second section 202 of the structure 200. To this end, the fourth frame 140 is slidingly coupled to two resting members 60 fixedly mounted to the second section 202 of the structure. The resting members 60 protrude away from the second section 202 of the structure in order to place the fourth frame 140 at a distance from the surface of the second section 202 of the structure.

The beam 142 of the fourth frame 140 has two opposite end portions. Each resting member 60 acts on a corresponding end portion of the beam 142.

The fourth frame 140 is structurally identical to the second 120 and third frame 130.

Between the second frame 120 and the third frame 130, a second transmission member 20 is placed. The second transmission member 20 is actuated by a shift of the second frame 120 and actuates the third frame 130.

Advantageously, the operating principle of the second transmission member 20 is completely passive, namely it does not require any electric, hydraulic, pneumatic or magnetic energy for working.

Preferably, the second transmission member 20 mechanically converts the movement of the second frame 120 into a movement of the third frame 130.

The second transmission member 20 has a transmission ratio that correlates the movement of the second frame 120 to the movement of the third frame 130. The transmission ratio is defined as the movement of the second frame 120 divided by the movement of the third frame 130.

Similarly, between the third frame 130 and the fourth frame 140, a third transmission member 30 is placed. The third transmission member 30 is actuated by a shift of the third frame 130 and actuates the fourth frame 140.

Advantageously, the operating principle of the third transmission member 30 is completely passive, namely it does not require any electric, hydraulic, pneumatic or magnetic energy for working.

Preferably, the third transmission member 30 mechanically converts the movement of the third frame 130 into a movement of the fourth frame 140.

The third transmission member 30 has a transmission ratio that correlates the movement of the third frame 130 to the movement of the fourth frame 140. The transmission ratio is defined as the movement of the third frame 130 divided by the movement of the fourth frame 140.

The overall movement between the two sections 201, 202 of the structure 200 is thus shared between the four lengths of cable 3, namely the four festoons, extending between the first support 51 and the second support 52.

Indeed, the first support 51 moves integral with the first section 201 of the structure 200 and the second support 52 moves integral with the second section 202 of the structure 200, while the supporting structure 124 of the second frame 120, the supporting structure 134 of the third frame 130, the supporting structure 144 of the fourth frame 120 slide with respect the first 201 and second sections 202 of the structure 200.

When the two sections 201, 202 of the structure 200 get closed (or move away) the first 51 and second support 52 get closed (of move away) of the same quantity. The supporting member of each frame moves according to the movement of correspond frame given by corresponding transmission member.

Preferably, the transmission ratio of the first transmission member 10 is different from the transmission ratio of the second transmission member 20 that, in turn, is different from the transmission ratio of the third transmission member 30.

Preferably, the transmission ratios of the first 10, second 20 and third transmission member 30 are set so that the displacements of the four lengths of cable 3 are identical, namely they extend or shorten of the same quantity.

In this way, the relative movement of the two sections 201, 202 of the structure 200 is evenly shared between the four festoons of cable 3.

Preferably, the transmission ratio TR of each transmission member can be set as:

$$TR = (POS + 1) / (POS),$$

wherein POS is an integer number indicating the position of the relevant transmission member along a development direction of the system.

In the above formula it has to be considered that the first transmission member 10 is in the last position, and the third transmission member 30 is considered as being in the first position.

In the example of figure 8 with four frames and three transmission members, the transmission ratio TR of each transmission member, according to the above formula, can be summarized in the following table:

| Transmission member | Reference number in fig. 2 | Position of the transmission member (POS) | Transmission ratio (TR) |
|---|---|---|---|
| First | 10 | 3 | 1.33 |
| Second | 20 | 2 | 1.50 |
| Third | 30 | 1 | 2.00 |

Therefore, assuming an overall movement of 1500 millimetres of the two sections 201, 202 of the structure 200, the overall displacement of any frame 120, 130, 140 is given by the displacement of the preceding frame divided by the transmission ratio of the transmission member acting between the two frames.

In the example of figure 8, the displacement of each frame is summarised in the following table that also indicates the relative displacement between each frame and the preceding frame. The following table further summarises the displacement of each cable support with respect to the section 202 of the structure 200.

| Cable support | Cable support movement | Movement respect the preceding cable support | Frame | Frame movement | Movement respect the preceding frame |
|---|---|---|---|---|---|
| First support (51) | 1500 | - | First frame | 1500 | - |
| Supporting structure second frame (124) | 1125 | 375 | Second frame | 1125 | 375 |
| Supporting structure third frame (134) | 750 | 375 | Third frame | 750 | 375 |
| Supporting structure fourth frame (144) | 375 | 375 | Fourth frame | 375 | 375 |
| Second support (52) | 0 | 375 | | | |

Therefore, in the above example the overall relative movement of 1500 millimetres of the two sections of the structure is compensated by relative displacements of 375 millimetres of each frame. This means that each length of cable 3 extending between two relative frames is subjected to a movement of just 375 millimetres.

The second 20 and third transmission member 30 are similarly to the first transmission member 10 shown in figure 7 and they comprise a corresponding shaft 40 pivotally hinged to the second section 202 of the structure 200 around a corresponding first pivot axis A.

The second transmission member 20 further comprises a first sleeve 41 provided at one end of the beam 122 of the second frame 120 opposite to the end facing the first transmission member 10. The shaft 40 is slidingly inserted into the first sleeve 41. The first sleeve 41 is hinged to the beam 122 of the second frame 120 around a second pivot axis B. The first pivot axis A is parallel to the second pivot axis B and perpendicular to the sliding direction of the second frame.

The second transmission member 20 further comprises a second sleeve 42 provided at one end of the beam 132 of the third frame 130 facing the second frame 120. The shaft 40 is also slidingly inserted into the second sleeve 42. The second sleeve 42 is hinged to the beam 132 of the third frame 130 around a third pivot axis C. The first pivot axis A is parallel to the third pivot axis C.

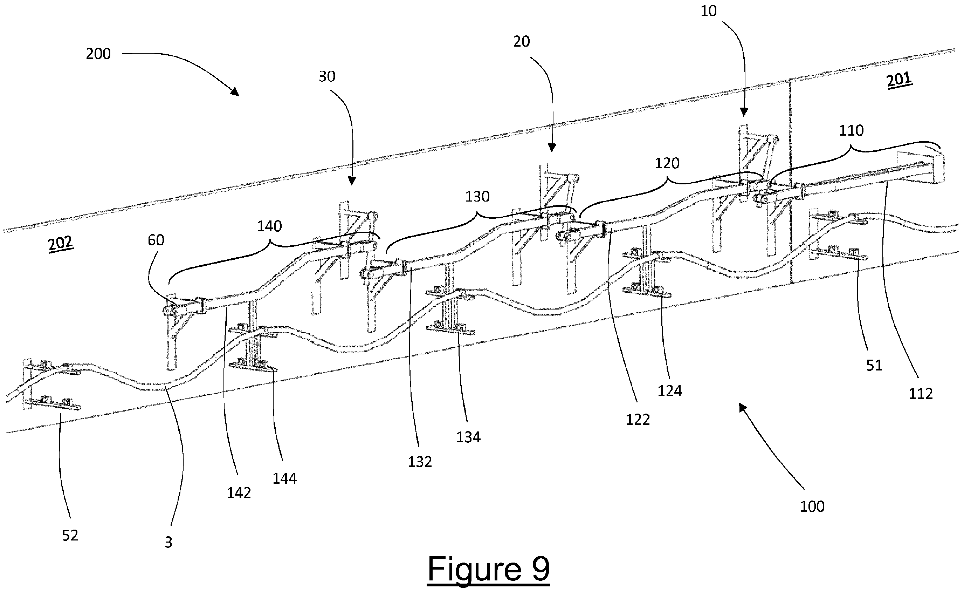

The movement of the second frame 120 rotates the shaft 40. This rotation determines the translation of the third frame 130. During the rotation of the shaft 40, the hinges between the first 41 and second sleeve 42 and the corresponding beam allow the first 41 and second sleeve 42 to slide along the shaft as illustrated in figure 9.

Therefore, the distances between the second B and third pivot axis C from the first pivot axis A change. However, the ratio between the distances of the second pivot axis B from the first pivot axis A and of the third axis C from the first pivot axis A remains unchanged.

The ratio between the distances of the second pivot axis B from the first pivot axis A and of the third axis C from the first pivot axis A determines the transmission ratio of the second transmission member 20.

Similarly, the third transmission member 30 further comprises a first sleeve 41 provided at one end of the beam 132 of the third frame 130 opposite to the end facing the second transmission member 20. The shaft 40 is slidingly inserted into the first sleeve 41. The first sleeve 41 is hinged to the beam 132 of the third frame 130 around a second pivot axis B. The first pivot axis A is parallel to the second pivot axis B and perpendicular to the sliding direction of the third frame.

The third transmission member 30 further comprises a second sleeve 42 provided at one end of the beam 142 of the fourth frame 140 facing the third frame 130. The shaft 40 is also slidingly inserted into the second sleeve 42. The second sleeve 42 is hinged to the beam 142 of the fourth frame 140 around a third pivot axis C. The first pivot axis A is parallel to the third pivot axis C.

The movement of the third frame 130 rotates the shaft 40. This rotation determines the translation of the fourth frame 140. During the rotation of the shaft 40, the hinges between the first 41 and second sleeve 42 and the corresponding beam allow the first 41 and second sleeve 42 to slide along the shaft, as illustrated in figure 9.

Therefore, the distances between the second B and third pivot axis C from the first pivot axis A change. However, the ratio between the distances of the second pivot axis B from the first pivot axis A and of the third axis C from the first pivot axis A remains unchanged.

The ratio between the distances of the second pivot axis B from the first pivot axis A and of the third axis C from the first pivot axis A determines the transmission ratio of the third transmission member 30.

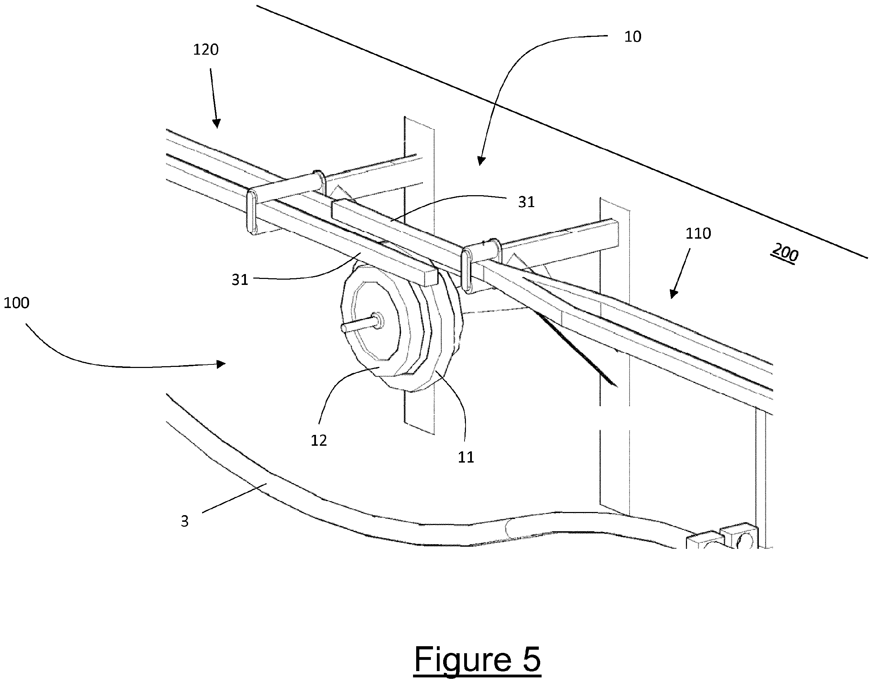

With reference to the example shown in figure 5, it is illustrated a first preferred variant of the transmission members according to the invention.

In this variant of the transmission member, the first 11 and second gear wheel 12 are directly coupled each other. In particular they are integral and coaxial and are rotatably mounted to a corresponding section of the structure 200. The first 11 and the second gear wheel 12 present different diameters and the ratio between the corresponding diameters defines the transmission ratio of the relative transmission member.

The first gear wheel 11, as above stated, engages the toothed rack 31 provided on the beam of the corresponding frame (in the example the first frame 110), while the second gear wheel 12 engages the toothed rack 31 provided on the beam of an adjacent frame.

In this variant, therefore, the secondary gears, as well as the chain 15, are not envisaged since the first gear wheel 11 directly rotates the second gear wheel 12.

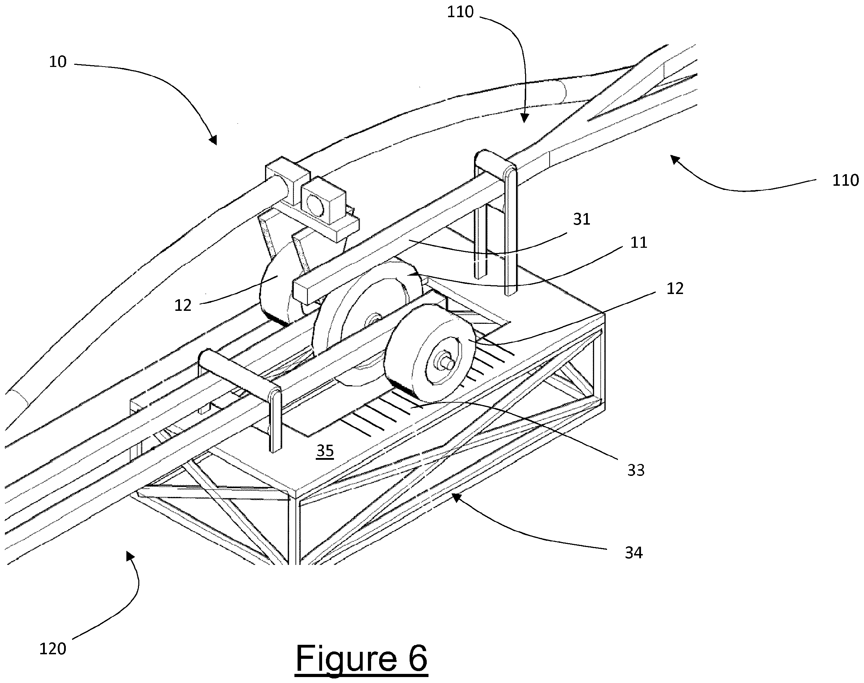

According to a second variant of the transmission member illustrated in the example shown in figure 6, the first gear wheel 11 is coaxial and integral with the second gear wheel 12 and engages the toothed rack 31 provided on the beam of the corresponding frame (in the example the first frame 110).

The second gear wheel 12 engages a toothed rack 33 provided on a platform 34 fixedly mounted on a corresponding section of the structure 200. Preferably, the toothed rack 33 is provided onto a planar surface 35 of the structure 34 facing the beams of the two frames acting on the transmission member.

The second gear wheel 12 is also rotatably mounted on the beam of the adjacent frame (in the example the second frame 120) acting on the same transmission member, so that the rotation of the first gear wheel 11 causes the translation of the adjacent frame.

Preferably, the second gear wheel 12 is doubled so that the second gear wheels 12 extend laterally to the first gear wheel 11 at opposite sides thereof. Clearly, both second gear wheels 12 engage a corresponding toothed rack 33 provided on the planar surface of the structure 34.

The first 11 and the second gear wheel 12 present different diameters and the ratio between the corresponding diameters defines the transmission ratio of the transmission member. Preferably, the rotation axes of the first 11 and second gear wheel 12 coincide and are perpendicular to the sliding direction of the frames.

In this variant, all the frames on which the transmission members acts comprises only one toothed rack 31 provided at one end portion of the corresponding beam.

The variants of the transmission members of figures 5 and 6 can be used in all the embodiments of the invention for replacing any transmission member except for the first 10 and second transmission member 20 of the second embodiment.

The system 100 according to the present invention can clearly be set for obtaining different movements between each frame, namely for sharing the movement of the two sections of the structure 200 unequally between the lengths of the cable held by the system.

By setting proper the transmission ratios of the transmission members it is possible to obtain any combination of movement of the cable held by the system.

In the figures, it is represented a system perfectly straight along a horizontal direction, assuming a straight and horizontal cable route. However, in case of route deviation, the system can accommodate such deviation by choosing a proper orientation of the gears axis of the transmission members.

**Claims**

1.  System (100) for installing a cable (3) across two movable sections (201, 202) of a structure (200) comprising:

    - a first support (51) fixed to a first section (201) of a structure (200) and holding a portion of a cable (3);
    - a second support (52) fixed to a second section (202) of the structure (200) and holding a portion of the cable (3);
    - a first frame (110) rigid with the first section (201) of the structure (200) and extended across a gap (5) between the first section (201) and the second section (202) of the structure (200);
    - a second frame (120) holding a portion of the cable (3) and slidable mounted on the second section (202) of the structure (200);
    - a first transmission member (10) attached to the second section (201) and acting between the first frame (110) and the second frame (120), wherein said first transmission member (10) is actuated by the first frame (110) and actuates, with a predetermined transmission ratio, the second frame (120) when the first (201) and second section (202) of the structure (200) move each other.

2.  System (100) according to claim 1, comprising a third frame (130) acting on a portion of the cable (3) for holding the same and mounted to the second section (202) of the structure (200) and movable thereto, wherein the third frame (130) is adjacent and spaced apart from the second frame (120), the system further comprising a second transmission member (20) positioned and acting between the second frame (120) and the third frame (130), wherein said second transmission member (20) is actuated by the second frame (120) and actuates the third frame (130).

3.  System (100) according to claim 1 or 2, wherein each transmission member (10, 20) has a corresponding transmission ratio for correlating the shifting of the frames (110, 120, 130) on which the transmission member acts.

4.  System (100) according to claim 2 or 3, comprising a fourth frame (140) acting on portions of the cable (3) for holding the same and mounted to the second section (202) of the structure (200) and movable thereto, wherein the fourth frame (140) is adjacent and spaced apart from the third frame (130) and wherein said fourth frame (140) succeeds said third frame (130), the system further comprising a third transmission member (30) acting on the fourth frame (140) and actuated by said third frame (130).

5.  System (100) according to one or more of the previous claims wherein each transmission member (10, 20, 30) is integral with the second section (202) of the structure and the frames are slidingly coupled to the second section (202) of the structure.

6.  System (100) according to claim 2 or 3, wherein the second frame (120) extends across the gap (5) between the first (201) and second section (202) of the structure and is also mounted on the first section (201) of the structure; said second frame (120) being slidingly coupled to the first (201) and second sections (202) of the structure.

7.  System (100) according to claims 3 and 6, comprising a fourth frame (140) mounted to the first section (201) of the structure, acting on a corresponding portion of the cable (3) and movable with respect the first section (201) of the structure; the system further comprising a third transmission member (30), positioned and acting between the second frame (120) and the fourth frame (140), actuating the fourth frame (140) and actuated by the second frame (120).

8.  System (100) according to claim 7, wherein the first (10) and second transmission members (20) are integral with the second section (202) of the structure and the third transmission member (30) is integral with the first section (201) of the structure.

9.  System (100) according to one or more of the previous claims, wherein said first (110) and second frames (120) comprise a corresponding toothed rack (31); said first transmission member (10) comprises a first gear wheel (11, 14) and a second gear wheel (12, 16), said first gear wheel (11, 14) engaging the toothed rack (31) of the first frame (110) and said second gear wheel (12, 16) engaging the toothed rack (31) of the second frame (120).

10. System (100) according to claims 4 and 9, wherein said second frame (120) comprises a further toothed rack (31) and said third (130) and fourth frames (140) comprises a corresponding toothed rack (31) and a corresponding further toothed rack (31); said second (20) and third transmission members (30) comprise a corresponding first gear wheel (11) and a second gear wheel (12); the first gear wheel (11) of the second transmission member (20) engaging the further toothed rack (31) of the second frame (120), said second gear wheel (12) of the second (20) and third transmission member (30) engaging a corresponding toothed rack (31) of the third (130) and fourth frame (140) and said first gear wheel (11) of the third transmission member (30) engaging the further toothed rack of the third frame (130).

11. System (10) according to claims 6 and 9, wherein said second transmission member (20) comprises a first gear wheel (14) and a second gear wheel (16) and said third frame (110) comprises a toothed rack (31); said first gear wheel (14) of the second transmission member (20) being coaxial and integral with the second gear wheel (12) of the first transmission member (10) and said second gear wheel (16) of the second transmission member (20) engaging the toothed rack (31) of the third frame (130).

12. System (100) according to one or more of claims 1 to 5, wherein all the frames (110, 120, 130, 140) comprise a toothed rack (31) provided at one end portion thereof, and wherein further toothed racks (33) are provided on said second section (202) of the structure; each transmission member (10, 20, 30) comprises a respective first gear wheel (11) and a respective second gear wheel (12) rotatably coupled to a corresponding one end of a frame opposite to the end provided with said toothed rack (31); each first gear wheel (11) engaging a corresponding toothed rack (31) of a frame and each second gear wheel (12) engaging a corresponding further toothed rack (33) of the second section.

13. System (10) according to one or more of claims 1 to 5, wherein said first transmission member (10) comprises a shaft (40) pivotally hinged to the second section (201) of the structure (200), a first sleeve (41) pivotally hinged at one end of the first frame (110) and slidingly coupled to said shaft (40); the first transmission member (10) further comprising a second sleeve (42) pivotally hinged at one end of the second frame (120) and slidingly coupled to said shaft (40).

14. System (10) according to claims 4 and 13, wherein said second (20) and third transmission member (30) comprise a respective shaft (40) pivotally hinged to the second section (201) of the structure (200), a respective first sleeve (41) pivotally hinged at one end of the second frame (120) and of the third frame (130) and slidingly coupled to said shaft (40); the second (20) and third transmission member (30) further comprising a respective second sleeve (42) pivotally hinged at one end of the third (130) and fourth frame (140) and slidingly coupled to said shaft (40).

**Patentansprüche**

1. System (100) zum Verlegen eines Kabels (3) über zwei bewegliche Abschnitte (201, 202) einer Struktur (200), umfassend:

   - einen ersten Träger (51), der an einem ersten Abschnitt (201) einer Struktur (200) befestigt ist und einen Abschnitt eines Kabels (3) hält;
   - einen zweiten Träger (52), der an einem zweiten Abschnitt (202) der Struktur (200) befestigt ist und einen Abschnitt des Kabels (3) hält;
   - einen ersten Rahmen (110), der starr mit dem ersten Abschnitt (201) der Struktur (200) verbunden ist und sich über einen Spalt (5) zwischen dem ersten Abschnitt (201) und dem zweiten Abschnitt (202) der Struktur (200) erstreckt;
   - einen zweiten Rahmen (120), der einen Teil des Kabels (3) hält und verschiebbar an dem zweiten Abschnitt (202) der Struktur (200) angebracht ist;
   - ein erstes Übertragungselement (10), das an dem zweiten Abschnitt (201) befestigt ist und zwischen dem ersten Rahmen (110) und dem zweiten Rahmen (120) wirkt, wobei das erste Übertragungselement (10) durch den ersten Rahmen (110) betätigt wird und mit einem vorbestimmten Übersetzungsverhältnis den zweiten Rahmen (120) betätigt, wenn der erste (201) und der zweite Abschnitt (202) der Struktur (200) sich gegenseitig bewegen.

2. System (100) nach Anspruch 1, umfassend einen dritten Rahmen (130), der auf einen Abschnitt des Kabels (3) wirkt, um dieses zu halten, und der an dem zweiten Abschnitt (202) der Struktur (200) angebracht und zu diesem hin beweglich ist, wobei der dritte Rahmen (130) an den zweiten Rahmen (120) angrenzt und von diesem beabstandet ist, wobei das System ferner ein zweites Übertragungselement (20) umfasst, das zwischen dem zweiten Rahmen (120) und dem dritten Rahmen (130) angeordnet ist und wirkt, wobei das zweite Übertragungselement (20) durch den zweiten Rahmen (120) betätigt wird und den dritten Rahmen (130) betätigt.

3. System (100) nach Anspruch 1 oder 2, wobei jedes Übertragungselement (10, 20) ein entsprechendes Übersetzungsverhältnis zur Korrelation der Verschiebung der Rahmen (110, 120, 130), auf die das Übertragungselement wirkt, aufweist.

4.  System (100) nach Anspruch 2 oder 3, umfassend einen vierten Rahmen (140) der auf Abschnitte des Kabels (3) wirkt, um dieses zu halten, und der an dem zweiten Abschnitt (202) der Struktur (200) angebracht und zu diesem beweglich ist, wobei der vierte Rahmen (140) an den dritten Rahmen (130) angrenzt und von diesem beabstandet ist und wobei der vierte Rahmen (140) auf den dritten Rahmen (130) folgt, wobei das System ferner ein drittes Übertragungselement (30) umfasst, das auf den vierten Rahmen (140) einwirkt und durch den dritten Rahmen (130) betätigt wird.

5.  System (100) nach einem oder mehreren der vorhergehenden Ansprüche, wobei jedes Übertragungselement (10, 20, 30) einstückig mit dem zweiten Abschnitt (202) der Struktur ist und die Rahmen gleitend mit dem zweiten Abschnitt (202) der Struktur gekoppelt sind.

6.  System (100) nach Anspruch 2 oder 3, wobei sich der zweite Rahmen (120) über den Spalt (5) zwischen dem ersten (201) und dem zweiten Abschnitt (202) der Struktur erstreckt und auch an dem ersten Abschnitt (201) der Struktur angebracht ist; wobei der zweite Rahmen (120) gleitend mit dem ersten (201) und zweiten Abschnitt (202) der Struktur gekoppelt ist.

7.  System (100) nach Anspruch 3 und 6, umfassend einen vierten Rahmen (140), der an dem ersten Abschnitt (201) der Struktur angebracht ist, auf einen entsprechenden Abschnitt des Kabels (3) wirkt und in Bezug auf den ersten Abschnitt (201) der Struktur beweglich ist; wobei das System ferner ein drittes Übertragungselement (30) umfasst, das zwischen dem zweiten Rahmen (120) und dem vierten Rahmen (140) angeordnet ist und auf den vierten Rahmen (140) einwirkt und durch den zweiten Rahmen (120) betätigt wird.

8.  System (100) nach Anspruch 7, wobei das erste (10) und das zweite Übertragungselement (20) einstückig mit dem zweiten Abschnitt (202) der Struktur sind und das dritte Übertragungselement (30) einstückig mit dem ersten Abschnitt (201) der Struktur ist.

9.  System (100) nach einem oder mehreren der vorhergehenden Ansprüche, wobei der erste (110) und der zweite Rahmen (120) eine entsprechende Zahnstange (31) aufweisen und das erste Übertragungselement (10) ein erstes Zahnrad (11, 14) und ein zweites Zahnrad (12, 16) aufweist, wobei das erste Zahnrad (11, 14) mit der Zahnstange (31) des ersten Rahmens (110) und das zweite Zahnrad (12, 16) mit der Zahnstange (31) des zweiten Rahmens (120) in Eingriff steht.

10. System (100) nach Anspruch 4 und 9, wobei der zweite Rahmen (120) eine weitere Zahnstange (31) und der dritte (130) und vierte Rahmen (140) eine entsprechende Zahnstange (31) und eine entsprechende weitere Zahnstange (31) aufweisen; das zweite (20) und dritte Getriebeelement (30) ein entsprechendes erstes Zahnrad (11) und ein zweites Zahnrad (12) aufweisen; das erste Zahnrad (11) des zweiten Getriebeelements (20) in die weitere Zahnstange (31) des zweiten Gestells (120) eingreift, das zweite Zahnrad (12) des zweiten (20) und dritten Getriebeelements (30) in eine entsprechende Zahnstange (31) des dritten (130) und vierten Gestells (140) eingreift (31) des zweiten Rahmens (120) eingreift, wobei das erste Zahnrad (11) des dritten Übertragungselements (30) in die weitere Zahnstange des dritten Rahmens (130) eingreift.

11. System (10) nach den Ansprüchen 6 und 9, wobei das zweite Getriebeelement (20) ein erstes Zahnrad (14) und ein zweites Zahnrad (16) aufweist und der dritte Rahmen (110) eine Zahnstange (31) aufweist; wobei das erste Zahnrad (14) des zweiten Getriebeelements (20) koaxial und einstückig mit dem zweiten Zahnrad (12) des ersten Getriebeelements (10) ist und das zweite Zahnrad (16) des zweiten Getriebeelements (20) in die Zahnstange (31) des dritten Rahmens (130) eingreift.

12. System (100) nach einem oder mehreren der Ansprüche 1 bis 5, wobei alle Rahmen (110, 120, 130, 140) eine Zahnstange (31) umfassen, die an einem Endabschnitt davon vorgesehen ist, und wobei weitere Zahnstangen (33) an dem zweiten Abschnitt (202) der Struktur vorgesehen sind; jedes Übertragungselement (10, 20, 30) ein jeweiliges erstes Zahnrad (11) und ein jeweiliges zweites Zahnrad (12) umfasst, die drehbar mit einem entsprechenden Ende eines Rahmens gekoppelt sind, das dem mit der Zahnstange (31) versehenen Ende gegenüberliegt; wobei jedes erste Zahnrad (11) in eine entsprechende Zahnstange (31) eines Rahmens eingreift und jedes zweite Zahnrad (12) in eine entsprechende weitere Zahnstange (33) des zweiten Abschnitts eingreift.

13. System (10) nach einem oder mehreren der Ansprüche 1 bis 5, wobei das erste Übertragungselement (10) eine Welle (40) umfasst, die schwenkbar an dem zweiten Abschnitt (201) der Struktur (200) schwenkbar angelenkt ist, eine erste Hülse (41), die schwenkbar eine erste Hülse (41), die schwenkbar an einem Ende des ersten Rahmens (110) angelenkt und gleitend mit der Welle (40) gekoppelt ist; wobei das erste Übertragungselement (10) ferner eine zweite Hülse (42) umfasst, die schwenkbar an einem Ende des zweiten Rahmens (120) angelenkt und gleitend mit der Welle (40) gekoppelt ist.

14. System (10) nach den Ansprüchen 4 und 13, wobei das zweite (20) und dritte Übertragungselement (30) eine jeweilige Welle (40) umfassen, die schwenkbar an dem zweiten Abschnitt (201) der Struktur (200) angelenkt ist, eine jeweilige erste Hülse (41), die schwenkbar an einem Ende des zweiten Rahmens (120) und des dritten Rahmens (130) angelenkt und gleitend mit der Welle (40) gekoppelt ist; wobei das zweite (20) und dritte Übertragungselement (30) ferner eine jeweilige zweite Hülse (42), die schwenkbar an einem Ende des dritten (130) und vierten Rahmens (140) angelenkt und gleitend mit der Welle (40) gekoppelt ist.

**Revendications**

1. Système (100) pour installer un câble (3) sur deux sections (201, 202) mobiles d'une structure (200) comprenant :

   - un premier support (51) fixé à une première section (201) d'une structure (200) et maintenant une partie d'un câble (3) ;
   - un deuxième support (52) fixé à une deuxième section (202) de la structure (200) et maintenant une partie du câble (3) ;
   - un premier cadre (110) solidaire de la première section (201) de la structure (200) et s'étendant sur un espace (5) entre la première section (201) et la deuxième section (202) de la structure (200) ;
   - un deuxième cadre (120) maintenant une partie du câble (3) et monté de manière coulissante sur la deuxième section (202) de la structure (200) ;
   - un premier élément de transmission (10) attaché à la deuxième section (201) et agissant entre le premier cadre (110) et le deuxième cadre (120), dans lequel ledit premier élément de transmission (10) est actionné par le premier cadre (110) et actionne, avec un rapport de transmission prédéterminé, le deuxième cadre (120) lorsque les première (201) et deuxième (202) sections de la structure (200) se déplacent mutuellement.

2. Système (100) selon la revendication 1, comprenant un troisième cadre (130) agissant sur une partie du câble (3) pour le maintenir et monté sur la deuxième section (202) de la structure (200) et mobile vers celle-ci, dans lequel le troisième cadre (130) est adjacent et espacé du deuxième cadre (120), le système comprenant en outre un deuxième élément de transmission (20) positionné et agissant entre le deuxième cadre (120) et le troisième cadre (130), dans lequel ledit deuxième élément de transmission (20) est actionné par le deuxième cadre (120) et actionne le troisième cadre (130).

3. Système (100) selon la revendication 1 ou 2, dans lequel chaque élément de transmission (10, 20) a un rapport de transmission correspondant pour corréler le décalage des cadres (110, 120, 130) sur lesquels l'élément de transmission agit.

4. Système (100) selon la revendication 2 ou 3, comprenant un quatrième cadre (140) agissant sur des parties du câble (3) pour le maintenir et monté sur la deuxième section (202) de la structure (200) et mobile vers celle-ci, dans lequel le quatrième cadre (140) est adjacent et espacé du troisième cadre (130) et dans lequel ledit quatrième cadre (140) succède audit troisième cadre (130), le système comprenant en outre un troisième élément de transmission (30) agissant sur le quatrième cadre (140) et actionné par ledit troisième cadre (130).

5. Système (100) selon une ou plusieurs des revendications précédentes dans lequel chaque élément de transmission (10, 20, 30) est d'un seul tenant avec la deuxième section (202) de la structure et les cadres sont couplés de manière coulissante à la deuxième section (202) de la structure.

6. Système (100) selon la revendication 2 ou 3, dans lequel le deuxième cadre (120) s'étend sur l'espace (5) entre les première (201) et deuxième (202) sections de la structure et est également monté sur la première section (201) de la structure ; ledit deuxième cadre (120) étant couplé de manière coulissante aux première (201) et deuxième (202) sections de la structure.

7. Système (100) selon les revendications 3 et 6, comprenant un quatrième cadre (140) monté sur la première section (201) de la structure, agissant sur une partie correspondante du câble (3) et mobile par rapport à la première section (201) de la structure ; le système comprenant en outre un troisième élément de transmission (30), positionné et agissant entre le deuxième cadre (120) et le quatrième cadre (140), actionnant le quatrième cadre (140) et actionné par le deuxième cadre (120) .

8. Système (100) selon la revendication 7, dans lequel les premier (10) et deuxième (20) éléments de transmission sont d'un seul tenant avec la deuxième section (202) de la structure et le troisième élément de transmission (30) est d'un seul tenant avec la première section (201) de la structure.

9. Système (100) selon une ou plusieurs des revendications précédentes, dans lequel lesdits premier (110) et deuxième (120) cadres comprennent une crémaillère (31) correspondante ; ledit premier élément de transmission (10) comprend une première roue d'engrenage (11, 14) et une deuxième roue d'engrenage (12, 16), ladite première roue d'engrenage (11, 14) engrenant la crémaillère (31) du premier cadre (110) et ladite deuxième roue d'engrenage (12, 16) engrenant la crémaillère (31) du deuxième cadre (120).

10. Système (100) selon les revendications 4 et 9, dans lequel ledit deuxième cadre (120) comprend une crémaillère (31) supplémentaire et lesdits troisième (130) et quatrième (140) cadres comprennent une crémaillère (31) correspondante et une crémaillère (31) correspondante supplémentaire ; lesdits deuxième (20) et troisième (30) éléments de transmission comprennent une première roue d'engrenage (11) et une deuxième roue d'engrenage (12) correspondantes ; la première roue d'engrenage (11) du deuxième élément de transmission (20) engrenant la crémaillère (31) supplémentaire du deuxième cadre (120), ladite deuxième roue d'engrenage (12) des deuxième (20) et troisième (30) éléments de transmission engrenant une crémaillère (31) correspondante des troisième (130) et quatrième (140) cadres, et ladite première roue d'engrenage (11) du troisième élément de transmission (30) engrenant la crémaillère supplémentaire du troisième cadre (130).

11. Système (10) selon les revendications 6 et 9, dans lequel ledit deuxième élément de transmission (20) comprend une première roue d'engrenage (14) et une deuxième roue d'engrenage (16) et ledit troisième cadre (110) comprend une crémaillère (31) ; ladite première roue d'engrenage (14) du deuxième élément de transmission (20) étant coaxiale et d'un seul tenant avec la deuxième roue d'engrenage (12) du premier élément de transmission (10) et ladite deuxième roue d'engrenage (16) du deuxième élément de transmission (20) engrenant la crémaillère (31) du troisième cadre (130).

12. Système (100) selon une ou plusieurs des revendications 1 à 5, dans lequel tous les cadres (110, 120, 130, 140) comprennent une crémaillère (31) prévue à une partie d'extrémité de ceux-ci, et dans lequel des crémaillères (33) supplémentaires sont prévues sur ladite deuxième section (202) de la structure ; chaque élément de transmission (10, 20, 30) comprend une première roue d'engrenage (11) respective et une deuxième roue d'engrenage (12) respective couplées de manière rotative à une extrémité correspondante d'un cadre opposé à l'extrémité munie de ladite crémaillère (31) ; chaque première roue d'engrenage (11) engrenant une crémaillère (31) correspondante d'un cadre et chaque deuxième roue d'engrenage (12) engrenant une crémaillère (33) supplémentaire correspondante de la deuxième section.

13. Système (10) selon une ou plusieurs des revendications 1 à 5, dans lequel ledit premier élément de transmission (10) comprend un arbre (40) articulé de manière pivotante à la deuxième section (201) de la structure (200), un premier manchon (41) articulé de manière pivotante à une extrémité du premier cadre (110) et couplé de manière coulissante audit arbre (40) ; le premier élément de transmission (10) comprenant en outre un deuxième manchon (42) articulé de manière pivotante à une extrémité du deuxième cadre (120) et couplé de manière coulissante audit arbre (40).

14. Système (10) selon les revendications 4 et 13, dans lequel lesdits deuxième (20) et troisième (30) éléments de transmission comprennent un arbre (40) respectif articulé de manière pivotante à la deuxième section (201) de la structure (200), un premier manchon (41) respectif articulé de manière pivotante à une extrémité du deuxième cadre (120) et du troisième cadre (130) et couplé de manière coulissante audit arbre (40) ; les deuxième (20) et troisième (30) éléments de transmission comprenant en outre un deuxième manchon (42) respectif articulé de manière pivotante à une extrémité des troisième (130) et quatrième (140) cadres et couplé de manière coulissante audit arbre (40).

Figure 1

Figure 1a

EP 3 488 509 B1

Figure 2

Figure 2a

EP 3 488 509 B1

EP 3 488 509 B1

Figure 3

Figure 3a

Figure 4

Figure 4a

EP 3 488 509 B1

Figure 5

EP 3 488 509 B1

Figure 6

EP 3 488 509 B1

Figure 7

Figure 8

Figure 9

EP 3 488 509 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4257717 A